# EUROPÄISCHE PATENTANMELDUNG

(11) **EP 2 048 765 A2**
(43) Veröffentlichungstag der Anmeldung: **15.04.2009**
(21) Anmeldenummer: 08105193.0
(22) Anmeldetag: 01.09.2008
(51) Int. Cl.: H02K 1/14

(54) **Statoranordnung sowie Stator für eine elektrische Maschine**

(30) Priorität: 08.10.2007 DE 102007048260
(71) Anmelder: Robert Bosch GmbH, 70442 Stuttgart (DE)
(72) Erfinder: Evans, Steven Andrew, 77813, Buehl (DE)

(57) **Zusammenfassung**

Die Erfindung betrifft eine Statoranordnung (2) für eine elektrische Maschine, die einen Statorkörper, einen oder mehrere von dem Statorkörper abstehende aktive Statorzähne (31), die an dem Statorkörper in einer Anordnungsrichtung angeordnet sind, so dass ein Spulenelement (4) an ihnen anordbar ist, sowie einen oder mehrere zwischen den aktiven Statorzähnen (31) angeordnete Folgezähne (32) umfasst, die von dem Statorkörper in Richtung der aktiven Statorzähne (31) abstehen. Die Breite der Folgezähne in Anordnungsrichtung der aktiven Statorzähne (31) und der Folgezähne (32) an dem Statorkörper ist kleiner als die der aktiven Statorzähne (31).

## Beschreibung

### Technisches Gebiet

Die Erfindung betrifft eine Statoranordnung sowie einen Stator für eine elektrische Maschine, insbesondere für einen bürstenlosen, Permanentmagnet erregten Synchronmotor.

### Stand der Technik

Allgemein sind im Stand der Technik Statoranordnungen für Synchronmaschinen bekannt, bei denen zur Minimierung der Anzahl von Spulenelementen auf den Statorzähnen nur jeder zweite Statorzahn von einer Spule umwickelt ist. Dadurch kann der Aufwand zum Umwickeln des betreffenden Statorzahns z.B. mithilfe einer Technik, die die Wicklung direkt auf den Statorzahn aufbringt, wie z.B. Nadel- oder Flyer-Wicklungstechniken, minimiert werden.

Eine Statoranordnung, bei der nur jeder zweite Statorzahn mit einem Spulenelement versehen ist, wird Folgezahnanordnung genannt. Die durch die Folgezähne fließende magnetische Fluss ergibt sich aus dem gemeinsamen magnetischen Flussanteil von zueinander benachbarten Spulenelementen durch den Statorkörper und dem dazwischen liegenden Folgezahn.

Die Statoranordnung gemäß dem Stand der Technik ist vorzugsweise so in einzelne Komponenten unterteilt, dass es möglich ist, die Spulenelemente mit einem hohen Nutfüllfaktor zu wickeln, um einen hohen Wirkungsgrad zu erreichen. Es ist dabei Ziel, die Zahl verwendeter Einzelelemente gering zu halten, um die Kosten für die vollständige Statoranordnung zu minimieren.

Es ist Aufgabe der vorliegenden Erfindung, eine Statoranordnung für einen Stator zur Verfügung zu stellen, dessen Nutfüllfaktor verbessert ist und der mit einer geringen Anzahl von einzelnen Elementen aufgebaut werden kann.

### Offenbarung der Erfindung

Die obige Aufgabe wird durch die Statoranordnung gemäß Anspruch 1 und durch den Stator gemäß dem nebengeordneten Anspruch gelöst.

Weitere vorteilhafte Ausgestaltungen der Erfindung sind in den abhängigen Ansprüchen angegeben.

Gemäß einem Aspekt ist eine Statoranordnung für eine elektrische Maschine vorgesehen. Die Statoranordnung umfasst einen Statorkörper, einen oder mehrere von dem Statorkörper abstehende aktive Statorzähne, die an dem Statorkörper in einer Anordnungsrichtung angeordnet sind, so dass ein Spulenelement an ihnen anordbar ist, sowie einen oder mehrere zwischen den Statorzähnen angeordnete Folgezähne, die von dem Statorkörper in Richtung der aktiven Statorzähne abstehen. Die Breite der Folgezähne in Anordnungsrichtung der aktiven Statorzähne und der Folgezähne an dem Statorkörper ist kleiner als die der aktiven Statorzähne.

Die Statoranordnung gemäß der vorliegenden Erfindung sieht vor, den nicht von einem Spulenelement zu umwickelnden Folgezahn schmaler auszubilden als die von den entsprechenden Spulenelementen zu umwickelnden Statorzähne. Dadurch wird der Nutbereich vergrößert und die Spulenelemente können mit mehr Windungen und/oder mit Windungen einer größeren Drahtdicke versehen werden. Dies erhöht das Drehmoment und/oder den gesamten Wirkungsgrad einer mit einer solchen Statoranordnung versehenen elektrischen Maschine gegenüber einer elektrischen Maschine mit einer Statoranordnung gemäß dem oben skizzierten Stand der Technik.

Weiterhin können die Folgezähne eine größere Länge in Längsrichtung aufweisen als die aktiven Statorzähne, wobei die Längsrichtung der Folgezähne quer zur Anordnungsrichtung und quer zur Richtung verläuft, in der die Statorzähne von dem Statorkörper abstehen.

Gemäß einer Ausführungsform kann die Breite der Folgezähne in Längsrichtung variabel sein, wobei insbesondere die Breite der Folgezähne in Richtung mindestens eines ihrer Enden in Längsrichtung gegenüber ihrer Mitte größer ist.

Die Statoranordnung kann mehrere Statorteile aufweisen, die quer zur Anordnungsrichtung der aktiven Statorzähne aneinander angeordnet sind, um den Statorkörper zu bilden. Insbesondere kann mindestens eines der Statorteile die aktiven Statorzähne tragen und eines oder mehrere weitere der Statorteile zumindest jeweils einen Abschnitt der Folgezähne tragen, wobei insbesondere die aktiven Statorzähne und/oder die Folgezähne in Längsrichtung zumindest einseitig über das jeweilige Statorteil überstehen. Bei einer Ausführungsform kann eines der Statorteile die aktiven Statorzähne tragen und ein weiteres der Statorteile die Folgezähne tragen. Bei einer weiteren Ausführungsform kann eines der Statorteile die aktiven Statorzähne tragen und zwei weitere der Statorteile jeweils einen Abschnitt der Folgezähne tragen, wobei das eine Statorteil zwischen den zwei weiteren Statorteile aufgenommen ist.

Weiterhin kann an einem dem Statorkörper gegenüberliegende Ende der aktiven Statorzähne und der Folgezähne jeweils ein Statorzahnschuh angeordnet sein, der zumindest in Anordnungsrichtung eine größere Breite aufweist, als der entsprechende aktive Statorzahn bzw. Folgezahn.

Der Statorkörper kann ringförmig und die aktiven Statorzähne und die Folgezähne können radial in Richtung einer Mittenachse des ringförmigen Statorkörpers ausgerichtet sein.

Gemäß einem weiteren Aspekt ist ein Stator mit einer obigen Statoranordnung vorgesehen, wobei die aktiven Statorzähne mit Spulenelementen versehen sind. Die Breite der Spulenelemente in Anordnungsrichtung und die Breite der Folgezähne kann so gewählt sein, dass zwischen den Spulenelementen und den Folgezähnen mindestens ein vordefinierter Mindestabstand verbleibt.

Gemäß einem weiteren Aspekt ist eine elektrische Maschine mit einem obigen Stator und mit einem Läufer mit Permanentmagneten vorgesehen.

### Kurzbeschreibung der Zeichnungen

Bevorzugte Ausführungsformen der Erfindung werden nachfolgend anhand der beigefügten Zeichnungen näher erläutert. Es zeigen:
Fig. 1 eine Querschnittsansicht durch einen herkömmlichen Stator für eine elektrische Maschine in einer Folgezahnanordnung, wobei nur jeder zweite Statorzahn mit einem Spulenelement umwickelt ist;
Fig. 2a eine Schnittansicht in einer tangentialen Richtung entlang einer Schnittlinie A-A durch einen Stator gemäß Fig. 1 radial nach außen;
Fig. 2b eine weitere Schnittansicht in axialer Richtung entlang einer Schnittlinie B-B durch eine Statoranordnung gemäß Fig. 2a;
Fig. 3a eine Schnittsansicht in einer tangentialen Richtung durch Statorzähne eines Stators gemäß einer Ausführungsform der Erfindung radial nach außen;
Fig. 3b eine weitere Schnittansicht in axialer Richtung entlang einer Schnittlinie B-B durch einen Stator gemäß Fig. 3a;
Fig. 4 eine perspektivische Ansicht eines Stators mit einer Statoranordnung der Figs. 3a und 3b;
Fig. 5 eine Explosionsdarstellung eines Stators gemäß der Ausführungsform der Figuren 3a, 3b und 4;
Fig. 6a eine perspektivische Ansicht der Statoranordnung der Figs. 3a, 3b, 4 und 5 zur Veranschaulichung der Struktur der Folgezähne;
Fig. 6b eine detaillierte perspektivische Ansicht eines entsprechenden Folgezahns;
Fig. 7a eine Schnittansicht in einer tangentialen Richtung durch die Statorzähne eines Stators gemäß einer weiteren Ausführungsform der Erfindung radial nach außen;
Fig. 7b eine weitere Schnittansicht in axialer Richtung entlang einer Schnittlinie B-B durch einen Stator gemäß Fig. 7a;
Fig. 8 eine perspektivische Ansicht eines Stators mit der Statoranordnung der Figs. 7a und 7b;
Fig. 9 eine Explosionsdarstellung der Statoranordnung der Fig. 8;
Fig. 10 eine perspektivische Ansicht der Statoranordnung der Ausführungsform der Figs. 7a, 7b, 8 und 9;
Fig. 11a eine Schnittansicht in einer tangentialen Richtung durch Statorzähne eines Stators gemäß einer weiteren Ausführungsform der Erfindung;
Fig. 11b eine weitere Schnittansicht in axialer Richtung entlang einer Schnittlinie B-B durch einen Stator gemäß Fig. 11a; und
Fig. 12 einen Ausschnitt aus einem Statorteil zur Ausbildung des Folgezahns gemäß der Ausführungsform der Figs. 11a und 11b.

### Ausführungsformen der Erfindung

Ausführungsformen der Erfindung werden nachfolgend anhand der beigefügten Zeichnungen erläutert, wobei gleiche Bezugszeichen Elemente gleicher oder vergleichbarer Funktion bezeichnen.

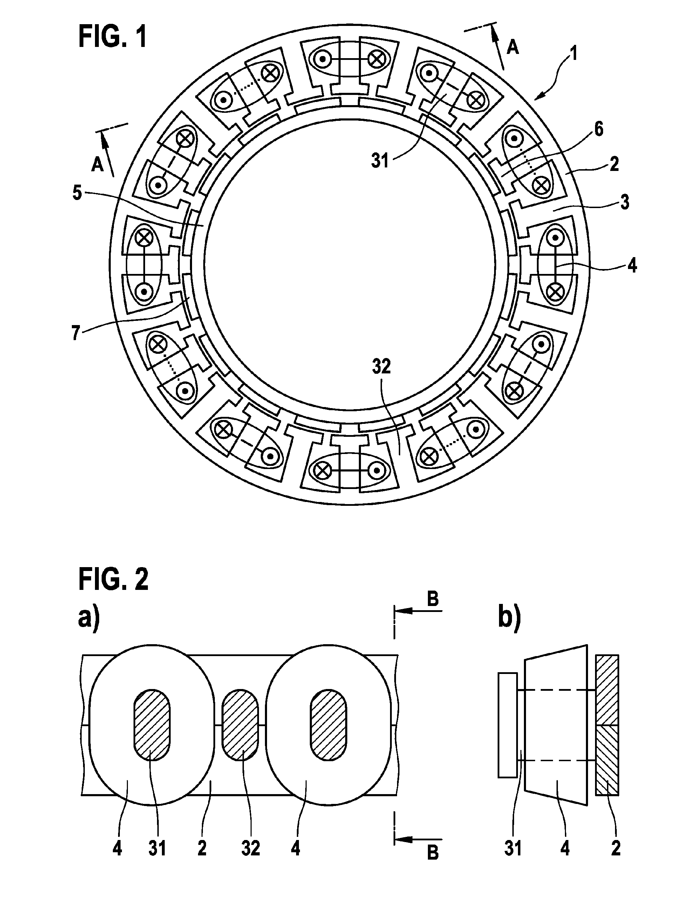

In Fig. 1 ist ein Stator 1 für eine elektrische Maschine mit einer Statoranordnung 2 dargestellt, die einen ringförmigen bzw. kreiszylindrischen Statorkörper mit 24 davon nach innen abstehenden, in einer Anordnungsrichtung angeordneten Statorzähnen 3 aufweist. Die Statoranordnung 2 ist aus einem weichmagnetischen Material (SMC-Material, SMC: Soft Magnetic Composite) wie z.B. einem Ferritmaterial, einem Pulvereisen-Material und dergleichen, oder aus Lamellenblech gebildet. Um 12 der 24 Statorzähne 3 sind Spulenelemente 4 vorgesehen, wobei die Spulenelemente 4 jeden zweiten Statorzahn 3 umschließen, so dass eine so genannte Folgezahnanordnung gebildet wird. Ein mit einem Spulenelement 4 versehener Statorzahn 3 wird aktiver Statorzahn 31 und ein zwischen zwei Spulenelementen 4 liegender Statorzahn 3 Folgezahn 32 genannt. Die Spulenelemente umfassen jeweils eine Spule mit einer oder mehreren Spulenwindungen aus geeignetem Spulendraht, wie z.B. Kupferdraht.

Die Statorzähne 3 sind jeweils an ihrem nach innen, d.h. in Richtung einer Mittenachse bzw. in Richtung einer Rotoranordnung 5 zugewandten Ende mit einem Statorzahnschuh 6 versehen, der sich in tangentialer Richtung bezüglich der Mittenachse über einen größeren Winkelbereich erstreckt als der entsprechende Statorzahn 3.

Die Rotoranordnung 5 ist im gezeigten Ausführungsbeispiel mit aufgesetzten Permanentmagneten 7 versehen, deren magnetisches Feld mit dem durch die Spulenelemente 4 auf den Statorzähnen 3 bewirkten magnetischen Feld zusammenwirkt, um die Rotoranordnung 5 in eine Drehbewegung zu versetzen, wenn die Spulenelemente 4 in geeigneter Weise angesteuert werden. Alternativ können die Permanentmagnete auch als vergrabene Permanentmagnete vorgesehen werden. Im gezeigten Ausführungsbeispiel handelt es sich um einen dreiphasigen, bürstenlosen Permanentmagnet erregten Synchronmotor, bei dem drei benachbarte Spulenelemente 4 mit jeweils einer separaten Phase angesteuert werden. Die separaten Phasen der Spulenelemente 4 sind als durchgezogene Linie, gepunktete Linie bzw. gestrichelte Linie in den Spulenelementen 4 dargestellt.

In Fig. 2a ist eine Querschnittsansicht in tangentialer Richtung der Statoranordnung 2 auf etwa halber Höhe der Statorzähne 3 mit einem Ausschnitt von drei Statorzähnen 3 dargestellt. Man erkennt den Querschnitt der Statorzähne 3, die einen länglichen Querschnitt mit abgerundeten Enden aufweisen, so dass die Windungen der Spulenelemente 4 nicht durch eventuelle Kanten des Statorzahns 31, den der Spulendraht des Spulenelementes 4 umgibt, zerstört werden können. Die Statorzähne 3, d.h. die aktiven Statorzähne 31 und die Folgezähne 32 sind gleichartig ausgebildet.

Wie in Fig. 2b in einer Querschnittsansicht in Pfeilrichtung auf die Schnittlinie B-B dargestellt ist, ist das Spulenelement 4 in Richtung der Mittenachse der elektrischen Maschine sich verjüngend ausgebildet, wobei dessen Außenkontur so geformt ist, dass das Spulenelement insbesondere in die zwischen den Statorzähnen 3 gebildeten Nuten aufgenommen werden kann.

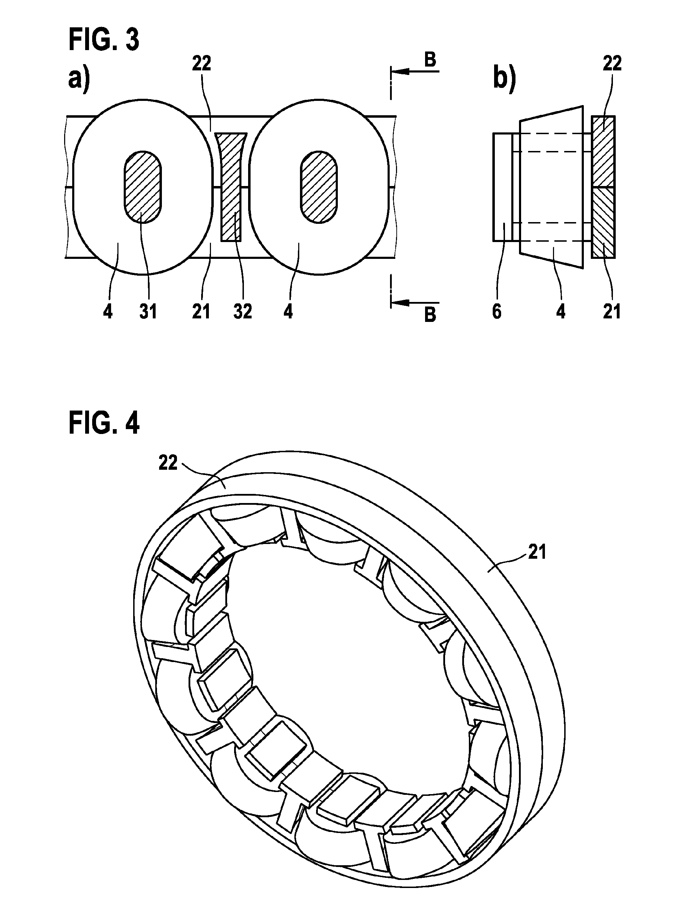

In den Figuren 3a und 3b sind Ansichten einer Statoranordnung gemäß einer Ausführungsform der Erfindung analog zu den Ansichten der Figuren 2a und 2b dargestellt. Die Ansicht der Fig. 3a entspricht somit einer Schnittansicht etwa in tangentialer Richtung (Anordnungsrichtung) durch die Mitte der Statorzähne 3. Die Ansicht der Fig. 3b entspricht einer Ansicht in Pfeilrichtung senkrecht auf die durch die Schnittlinie B-B und der Achsrichtung der Statoranordnung aufgespannten Fläche.

Aus der Schnittansicht der Fig. 3a wird deutlich, dass der zwischen zwei benachbarten Spulenelementen 4 angeordnete Folgezahn eine andere Querschnittsform aufweist wie die von den Spulenelementen 4 umgebenen aktiven Statorzähne 31. Der Folgezahn 32 ist in Achsrichtung länger als die benachbarten aktiven Statorzähne 31 und weist eine verringerte Breite quer zur Achsrichtung auf. So können die Spulenelemente 4 mit einer größeren Spulendicke vorgesehen werden als bei Spulenelementen im Stand der Technik. Eine größere Spulendicke ermöglicht eine größere Anzahl von Windungen und/oder dickere Spulendrähte, die einen höheren Strom führen können. Beide Maßnahmen erhöhen alleine und in Kombination den Gesamtwirkungsgrad einer elektrischen Maschine mit einem derartigen Stator.

Gemäß einer Ausführungsform entspricht die Länge des Folgezahns 32 in axialer Richtung im Wesentlichen der Länge des auf dem Folgezahn 32 angeordneten Statorzahnschuhs 6. Die Statorzahnschuhe 6 eines normalen Statorzahns 31 und eines Folgezahns 32 weisen vorzugsweise gleiche Abmessungen bezüglich dessen axialer Richtung sowie dessen tangentialer Richtung auf und sind somit hinsichtlich ihrer wirkenden Fläche im Wesentlichen identisch ausgebildet. Durch die bezüglich der axialen Länge der normalen Statorzähne 31 vergrößerten axialen Länge der Folgezähne 32 ist der Querschnitt der Folgezähne nicht deutlich gegenüber dem der normalen Statorzähne 31 reduziert und kann diese sogar übertreffen.

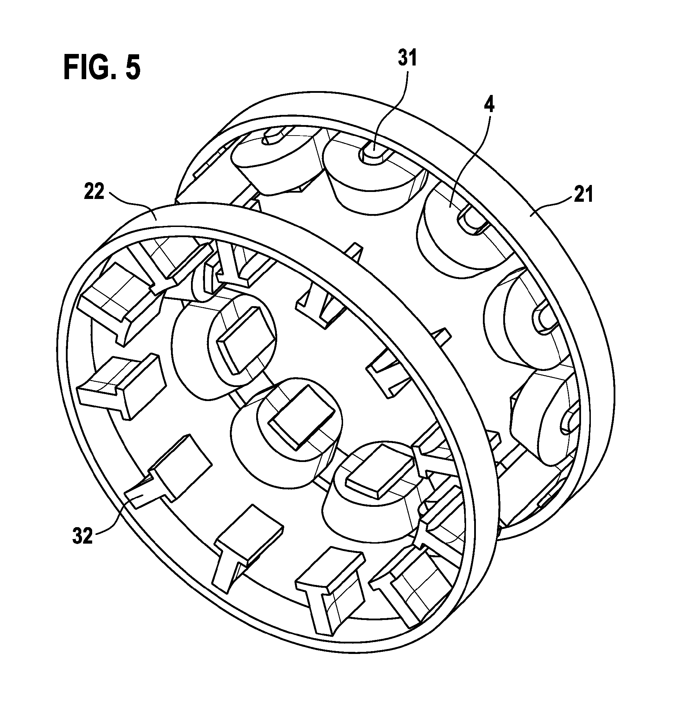

In Fig. 4 ist eine perspektivische Ansicht des Stators der Ausführungsform der Figs 3a und 3b dargestellt. Man erkennt, dass die Statoranordnung 2 des Stators 1 zweiteilig unter einem ersten Statorteil 21 und einem zweiten Statorteil 22 aufgebaut ist, die in axialer Richtung aufeinander angeordnet sind. In der Explosionsdarstellung der Fig. 5 erkennt man, dass das erste Statorteil 21 ein kreiszylindrisches Basisteil umfasst, d.h. als Ring ausgebildet ist, auf dem nur die aktiven Statorzähne 31 angeordnet sind. Die aktiven Statorzähne 31 ragen in axialer Richtung des ersten Statorteils 21 über das Basisteil des ersten kreiszylindrischen Statorteils 21 hinaus und sind von jeweiligen Spulenelementen 4 umwickelt. Das zweite Statorteil 22 umfasst ebenfalls ein kreiszylindrisches Basisteil, an dem nur die Folgezähne 32 angeordnet sind. Die Folgezähne 32 ragen ebenfalls in axialer Richtung über eine Seite des kreiszylindrischen Basisteils des zweiten Statorteils 22 hinaus. Bei der Montage werden das erste Statorteil 21 und das zweite Statorteil 22 so miteinander verbunden, dass die von dem zweiten Statorteil 22 abstehenden Folgezähne 32 zwischen die benachbarten Spulenelemente 4, die an den aktiven Statorzähnen 31 des ersten Statorteils 21 vorgesehen sind, hineinragen. Umgekehrt ragen die von dem ersten Statorteil 21 abstehenden aktiven Statorzähne 31, die mit den Spulenelementen 4 versehen sind, zwischen die Folgezähne 32 des zweiten Statorteils 22.

Wie in Fig. 3a ersichtlich, ist der Querschnitt des Folgezahns zumindest teilweise an die Kontur der Spulenelemente 4 angepasst, ohne dass sich die Außenflächen des Folgezahns 32 und des benachbarten Spulenelementes 4 berühren. Im dargestellten Ausführungsbeispiel weist beispielsweise der Teil des Folgezahns 32, der an dem Basisteil des zweiten Statorteils 22 angeordnet ist, eine entsprechende Verdickung in tangentialer Richtung der Statoranordnung 2 auf, die der Verjüngung der Spulenelemente 4 im zusammengesetzten Zustand des Stators entspricht. Zwischen dem Folgezahn 32 und den Spulenelementen 4 ist dabei vorzugsweise ein geringer Abstand von beispielsweise 1 mm oder dergleichen vorgesehen, um bei der Montage des Stators eine Beschädigung der Spulenelemente durch den Folgezahn zu vermeiden.

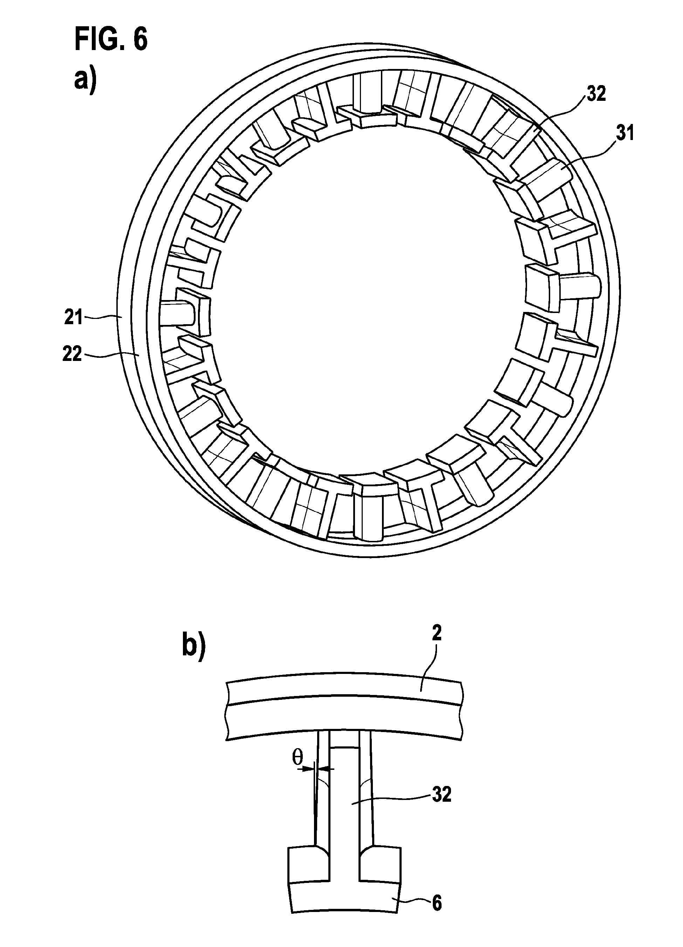

Um das Zusammenfügen des ersten und zweiten Statorteils 21, 22 nicht zu behindern, ist das dem verbreiterten Ende (in axialer Richtung) des Folgezahns 32 gegenüberliegende Ende nicht verbreitert, da dieses Ende bei der Montage zwischen die Abstandsbereiche benachbarter Spulenelemente 4 geschoben wird. Die aus dem ersten und zweiten Statorteil 22 aufgebaute Statoranordnung 2 ohne montierte Spulenelemente 4 ist in Fig. 6a in einer perspektivischen Darstellung gezeigt. Man erkennt deutlich die aktiven Statorzähne 31 mit den in axialer Richtung abgerundeten Enden und die dazwischen liegenden Folgezähnen 32 mit ihrer im hinteren Bereich vorgesehenen Profilierung.

Eine Draufsicht auf einen der Folgezähne 32 in axialer Richtung ist in Fig. 6b in einer Abwandlung dargestellt. Man erkennt, dass sich der Querschnitt des Folgezahns 32 zwischen dem Folgezahnschuh 6 und dem Basisteil der Statoranordnung 1 entlang seiner Erstreckung ändern oder eine sonstige Profilierung aufweisen kann, die der Außenkontur der Spulenelemente 4 entspricht, die dem entsprechenden Folgezahn 32 zugewandt sind. Im gezeigten Ausführungsbeispiel verjüngt sich der Folgezahn in radialer Richtung. Im gezeigten Beispiel verjüngt sich der Folgezahn von dem Folgezahnschuh 6 in Richtung zu dem Basisteil der Statoranordnung mit einem Winkel θ.

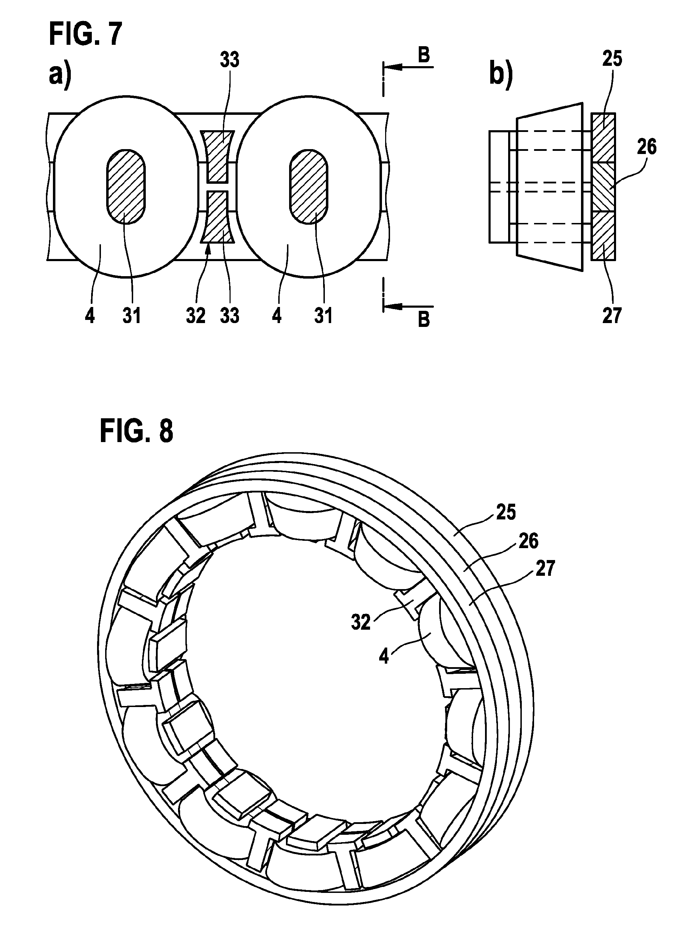

In den Figuren 7 bis 10 ist eine weitere Ausführungsform einer Statoranordnung und eines Stators dargestellt. Im Folgenden werden nur die Merkmale beschrieben, die sich von den vorangehenden Ausführungsformen unterscheiden.

Wie man z.B. aus den Schnittsansichten der Figuren 7a und 7b, die den Schnittansichten der Figuren 3a und 3b entsprechen, entnehmen kann, ist die Statoranordnung 2 dieser Ausführungsform dreiteilig aus drei kreiszylindrischen Ringen, d.h. einem ersten Statorteil 25, einem zweiten Statorteil 26 und einem dritten Statorteil 27 zusammengesetzt, wobei die kreiszylindrischen Statorteile 25, 26 und 27 konzentrisch in axialer Richtung übereinander angeordnet sind. Im zusammengesetzten Zustand der Statoranordnung 2 sind im Unterschied zur Ausführungsform der Figuren 3 bis 6 die Folgezähne 32 jeweils zweiteilig mit zwei Abschnitten 33 ausgebildet, wobei beide Abschnitte 33 der Folgezähne 32 mit einer Kontur versehen sind, die der Kontur der an ihnen benachbart angeordneten Spulenelemente 4 entspricht. D.h., die Abschnitte 33 des betreffenden Folgezahns 32 erweitern sich in ihrer Breite (ihre tangentiale Erstreckung) in axialer Richtung der Statoranordnung 2 jeweils nach außen hin bzw. verjüngen sich jeweils zur Mitte der Statoranordnung 2. Die beiden Abschnitte 33 des Folgezahns 32 liegen im zusammengesetzten Zustand der Statoranordnung 2 aneinander an oder weisen einen Abstand zueinander auf.

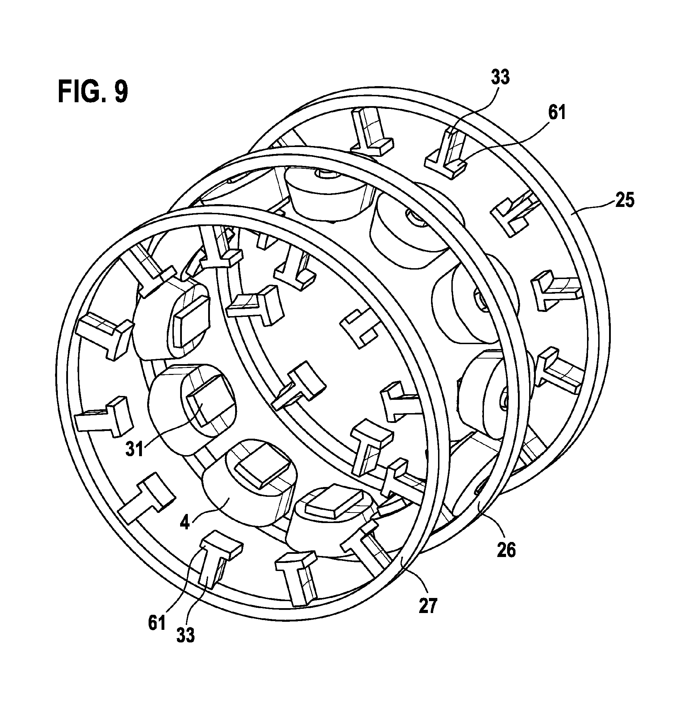

Wie man in den Figuren 8 bis 10a erkennen kann, trägt jeder der Abschnitte 33 des Folgezahns 32 einen Abschnitt 61 des entsprechenden Folgezahnschuhs 6 , dessen axiale Länge der axialen Länge des entsprechenden Abschnitts 33 des Folgezahns 32 entspricht. Wie man aus Fig. 9 erkennen kann, sind das erste und dritte Statorteil 25, 27 gleichartig ausgebildet und weisen jeweils einen Abschnitt des Folgezahns 32 auf, der in axialer Richtung aus dem kreiszylindrischen Basisteil des jeweiligen ersten bzw. dritten Statorteils 25, 27 hervorsteht. Das zweite Statorteil 26 ist zwischen dem ersten und dritten Statorteil 25, 27 angeordnet und trägt die aktiven Statorzähne 31, die beidseitig des entsprechenden kreiszylindrischen Basisteils in axialer Richtung überstehen und die mit entsprechenden Spulenelementen 4 versehen sind. Wie aus Fig. 9 ersichtlich ist, werden die einzelnen Statorteile 25, 26, 27 so aufeinander gesetzt, dass die Überstände der Abschnitte 33 der Folgezähne 32 in die zwischen den benachbarten Spulenelementen 4 an dem mittig angeordneten zweiten Statorteil 26 eingreifen. Bei Aufsetzen des ersten und des dritten Statorteils 25, 27 auf das mittige zweite Statorteil 26 liegen sich die entsprechenden beiden Abschnitte 33 jedes der Folgezähne 32 einander gegenüber, so dass diese gemeinsam einen Folgezahn 32 bilden, mit dem entsprechenden darauf angeordneten Statorzahnschuh 6.

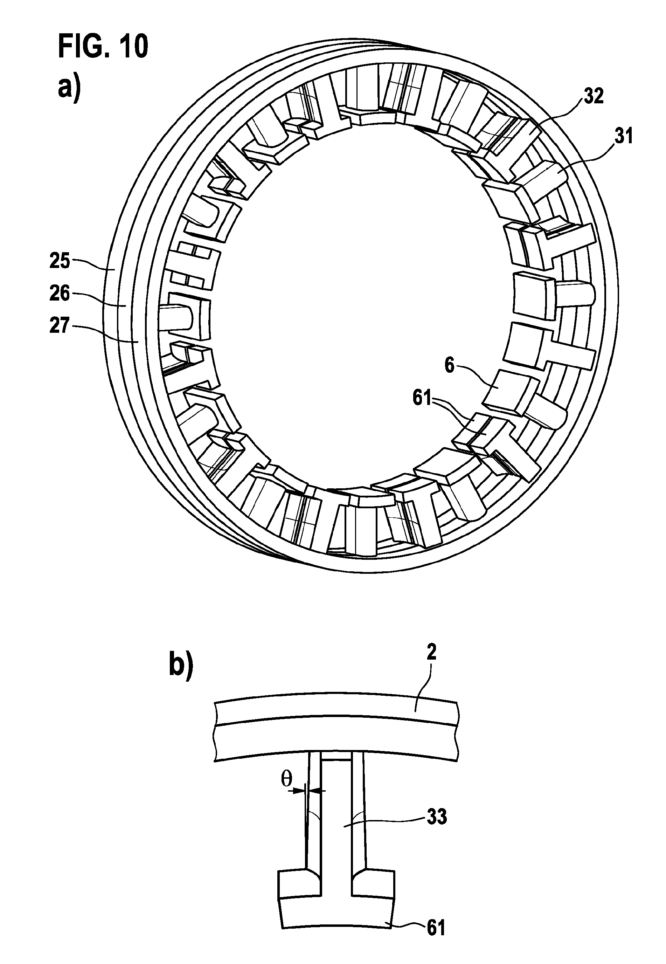

Wie in Fig. 10b dargestellt ist, ist es auch bei dieser Ausführungsform möglich, den Folgezahn 32 bzw. dessen Abschnitte mit einer Querschnittsänderung in radialer Richtung bezüglich der Mittenachse des Stators 1 der elektrischen Maschine, wie z.B. mit einem sich nach außen hin verjüngenden Profil zu versehen.

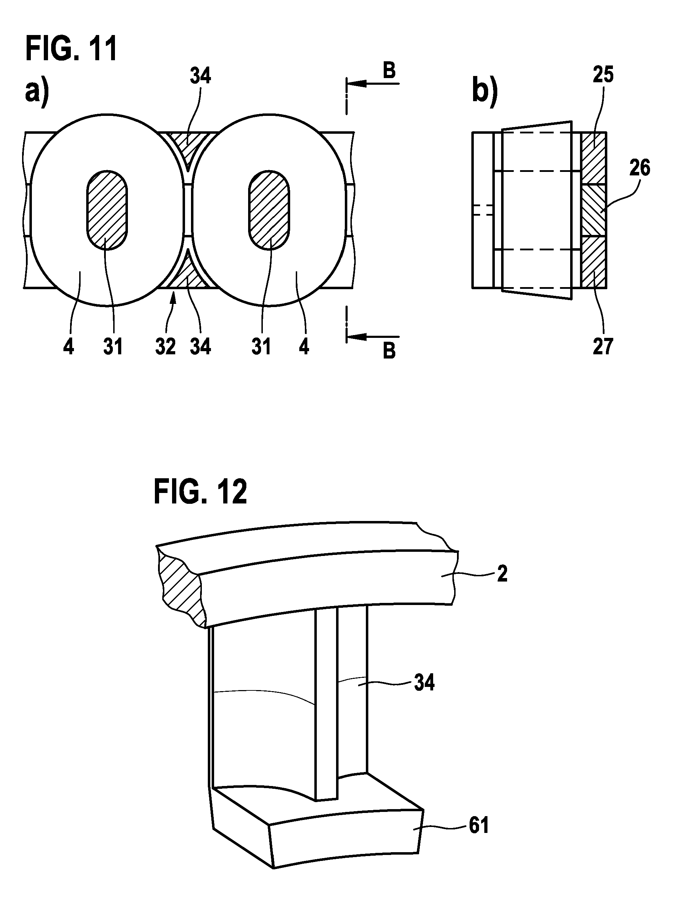

In den Figuren 11 und 12 ist eine Abwandlung der Ausführungsform der Figuren 7 bis 10b dargestellt. Darin sind zwei Abschnitte 34 des Folgezahns 32 nur noch an den Rändern der Statoranordnung 2 angeordnet und die Spulenelemente 4 so ausgebildet, dass sie zueinander nur noch einen minimalen Abstand aufweisen, d.h. deren Außenkonturen berühren sich in der tangentialen Erstreckung beinahe. Zwischen den beiden Spulenelementen 4 ist nicht ausreichend Raum, einen ausreichend mechanisch stabilen Abschnitt eines Folgezahns 32 anzuordnen. In der gezeigten Abwandlung liegen die Abschnitte 34 der Folgezähne 32 nur auf dem jeweiligen ersten und dritten Statorteil 25, 27, ohne über diese in axialer Richtung hinaus überzustehen. Die Abschnitte 34 der Folgezähne 32 tragen jedoch einen Abschnitt 61 eines Statorzahnschuhs 6, der von dem ersten bzw. dritten Statorteil 25, 27 in axialer Richtung übersteht und beim Zusammenbau der Statoranordnung 2 aneinander anliegen bzw. sich nur mit einem geringen Abstand (kleiner als die axiale Breite des zweiten Statorteils 26) gegenüberliegen, wie es in der Ausführungsform der Figuren 7 bis 10 der Fall ist.

Bei der vorliegenden Erfindung kann das Drehmoment und/oder der Wirkungsgrad einer elektrischen Maschine erhöht werden, obwohl der Querschnitts der Folgezähne reduziert wird. Durch die Reduzierung des Querschnittes der Folgezähne ist es möglich, einen höheren Nutfüllungsgrad zu erreichen, wodurch die nachteilige Wirkung eines verringerten Querschnitt der Folgezähne ausgeglichen wird.

## Patentansprüche

1. Statoranordnung (2) für eine elektrische Maschine, umfassend:
- einen Statorkörper;
- einen oder mehrere von dem Statorkörper abstehende aktive Statorzähne (3), die an dem Statorkörper in einer Anordnungsrichtung angeordnet sind; so dass ein Spulenelement (4) an ihnen anordbar ist;
- einen oder mehrere zwischen den Statorzähnen (3) angeordnete Folgezähne (32), die von dem Statorkörper in Richtung der aktiven Statorzähne (31) abstehen,
**dadurch gekennzeichnet, dass**
die Breite der Folgezähne (32) in Anordnungsrichtung der aktiven Statorzähne (31) und der Folgezähne (32) an dem Statorkörper kleiner ist als die der aktiven Statorzähne (31).

2. Statoranordnung nach Anspruch 1, **dadurch gekennzeichnet, dass** die Folgezähne (32) eine größere Länge in Längsrichtung aufweist als die aktiven Statorzähne (31), wobei die Längsrichtung der Folgezähne (32) quer zur Anordnungsrichtung und quer zur Richtung verläuft, in der die Statorzähne (3) von dem Statorkörper abstehen.

3. Statoranordnung nach Anspruch 1 oder 2, **dadurch gekennzeichnet, dass** die Breite der Folgezähne (32) in Längsrichtung variabel ist, wobei insbesondere die Breite der Folgezähne (32) in Richtung mindestens eines ihrer Enden in Längsrichtung gegenüber ihrer Mitte größer ist.

4. Statoranordnung nach einem der Ansprüche 1 bis 3, **dadurch gekennzeichnet, dass** die Statoranordnung (2) mehrere Statorteile (21, 22, 25, 26, 27) aufweist, die quer zur Anordnungsrichtung der aktiven Statorzähne (3) aneinander angeordnet sind, um den Statorkörper zu bilden.

5. Statoranordnung nach Anspruch 4, **dadurch gekennzeichnet, dass** mindestens eines der Statorteile (21, 22, 25, 26, 27) die aktiven Statorzähne trägt und eines oder mehrere weitere der Statorteile (21, 22, 25, 26, 27) zumindest jeweils einen Abschnitt der Folgezähne (32) trägt, wobei insbesondere die aktiven Statorzähne (31) und/oder die Folgezähne (32) in Längsrichtung zumindest einseitig über das jeweilige Statorteil (21, 22, 25, 26, 27) überstehen.

6. Statoranordnung (2) nach Anspruch 5, **dadurch gekennzeichnet, dass** eines der Statorteile die aktiven Statorzähne (31) trägt und ein weiteres der Statorteile (21, 22, 25, 26, 27) die Folgezähne (32) trägt.

7. Statoranordnung (2) nach Anspruch 5, **dadurch gekennzeichnet, dass** eines der Statorteile (21, 22, 25, 26, 27) die aktiven Statorzähne (31) trägt und zwei weitere der Statorteile (21, 22, 25, 26, 27) jeweils einen Abschnitt der Folgezähne (32) trägt, wobei das eine Statorteil (21, 22, 25, 26, 27) zwischen den zwei weiteren Statorteilen (21, 22, 25, 26, 27) aufgenommen ist.

8. Statoranordnung (2) nach einem der Ansprüche 1 bis 7, **dadurch gekennzeichnet, dass** an einem dem Statorkörper gegenüberliegenden Ende der aktiven Statorzähne (31) und der Folgezähne (32) jeweils ein Statorzahnschuh angeordnet ist, der zumindest in Anordnungsrichtung eine größere Breite aufweist, als der entsprechende aktive Statorzahn (31) bzw. Folgezahn (32).

9. Statoranordnung (2) nach einem der Ansprüche 1 bis 8, **dadurch gekennzeichnet, dass** der Statorkörper ringförmig ist und die aktiven Statorzähne (31) und die Folgezähne (32) radial in Richtung einer Mittenachse des ringförmigen Statorkörpers ausgerichtet sind.

10. Stator mit einer Statoranordnung nach einem der Ansprüche 1 bis 9, wobei Spulenelemente (4) an den aktiven Statorzähnen (31) vorgesehen sind.

11. Stator nach Anspruch 10, wobei die Breite der Spulenelemente (4) in Anordnungsrichtung und die Breite der Folgezähne so gewählt ist, dass zwischen den Spulenelementen und den Folgezähnen mindestens ein vordefinierter Mindestabstand verbleibt.

12. Elektrische Maschine mit einem Stator nach Anspruch 10 oder 11 und mit einem Läufer mit Permanentmagneten.
